# EUROPÄISCHE PATENTSCHRIFT

(11) **EP 3 530 028 B1**
(45) Veröffentlichungstag und Bekanntmachung des Hinweises auf die Patenterteilung: **08.12.2021**
(21) Anmeldenummer: 17784938.7
(22) Anmeldetag: 16.10.2017
(51) Int. Cl.: H04W 24/08, G08G 1/16, H04W 80/08, H04W 84/18

(54) **VERFAHREN ZUR ÜBERWACHUNG DER QUALITÄT EINER DATENVERBINDUNG SOWIE TEILNEHMERSTATION UND NETZVERWALTUNGSEINHEIT ZUR VERWENDUNG BEI DEM VERFAHREN**
METHOD FOR MONITORING THE QUALITY OF A DATA CONNECTION, AND SUBSCRIBER STATION, AND NETWORK MANAGEMENT UNIT FOR USE IN THE METHOD
PROCÉDÉ DE SURVEILLANCE DE LA QUALITÉ D'UNE LIAISON DE DONNÉES AINSI QUE STATION D'ABONNÉ ET UNITÉ DE GESTION DE RÉSEAU DESTINÉES À ÊTRE UTILISÉES LORS DUDIT PROCÉDÉ

(30) Priorität: 21.10.2016 DE 102016220724; 15.03.2017 DE 102017204326
(43) Veröffentlichungstag der Anmeldung: 28.08.2019
(73) Patentinhaber: Volkswagen Aktiengesellschaft, 38440 Wolfsburg (DE)
(72) Erfinder: ALIEIEV, Roman, 39576 Stendal (DE); KWOCZEK, Andreas, 38165 Lehre (DE); HEHN, Thorsten, 38446 Wolfsburg (DE)
(86) Internationale Anmeldenummer: PCT/EP2017/076318
(87) Internationale Veröffentlichungsnummer: WO 2018/073162

(56) Entgegenhaltungen:
- EP-A2- 2 437 541
- DE-A1- 10 356 256
- US-A1- 2012 069 748
- US-A1- 2015 063 152
- HUAWEI ET AL: "Congestion Control for Uu and PC5 based V2X transmission", 3GPP DRAFT; R2-163808 CONGESTION CONTROL FOR UU AND PC5 BASED V2X TRANSMISSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , Bd. RAN WG2, Nr. Nanjing, China; 20160523 - 20160527 22. Mai 2016 (2016-05-22), XP051105214, Gefunden im Internet: URL:http://www.3gpp.org/ftp/Meetings_3GPP_ SYNC/RAN2/Docs/ [gefunden am 2016-05-22]

## Beschreibung

Die Erfindung betrifft ein Verfahren zur Überwachung der Qualität einer Datenverbindung, bei der Daten über einen gestörten Funkkanal zu mindestens einer Empfangsstation übertragen werden. Die Erfindung betrifft weiterhin eine Teilnehmerstation zur Verwendung bei dem Verfahren.

Für das Szenario von mit Funkkommunikationsmodulen ausgestatteten Fahrzeugen, die im öffentlichen Straßenverkehr direkt miteinander kommunizieren, sei es für ein kooperatives oder autonomes Fahren, ist eine sehr hohe Verlässlichkeit für sicherheitskritische Anwendungen sehr wichtig. Techniken für die Fahrzeug-zu-Fahrzeug Direktkommunikation wurden bereits entwickelt und werden weiterentwickelt. Als Beispiel werden erwähnt die Fahrzeug-Direktkommunikation über WLAN, hier insbesondere die Variante nach dem WLAN Standard IEEE 802.11p. Bei dieser Technik werden zur Kommunikation zwischen den Fahrzeugen ad hoc WLAN Netze aufgebaut (Kommunikation im Bereich der "Ad Hoc Domain").

Fahrzeugkommunikation ist aber auch im Bereich der Mobilfunknetze möglich. Bei dieser Technik muss allerdings eine Basisstation die Nachrichten von Fahrzeug zu Fahrzeug vermitteln. Das ist der Bereich, wo die Kommunikation in der sogenannten "Infrastructure Domain" stattfindet. Für die kommende Mobilfunkgeneration wird auch die Fahrzeugdirektkommunikation ermöglicht. Bei LTE heißt diese Variante LTE-V, bei der 5G Initiative heißt diese Variante D2D.

Typische Kommunikations-Szenarien sind Sicherheitsszenarien, Verkehrseffizienzszenarien und Infotainment. Für den Bereich Sicherheit werden folgende Szenarien genannt: "Cooperative Forward Collision Warning", "Pre-Crash Sensing/Warning", "Hazardous Location Warning". In diesen Bereichen tauschen die Fahrzeuge untereinander Informationen wie Position, Richtung und Geschwindigkeit aus, auch Parameter wie Größe und Gewicht. Weitere Informationen die übertragen werden betreffen Absichtsinformationen, wie Fahrzeug beabsichtigt zu überholen, Fahrzeug biegt links/rechts ab, usw., die für das kooperative Fahren interessant sind. Dabei werden oft Sensordaten übermittelt. Falls eine Gefahrensituation vorliegt und der Fahrer nicht reagiert, könnte das Auto automatisch abbremsen, so dass ein Unfall verhindert wird oder zumindest die Folgen bei einem unvermeidlichen Unfall möglichst gering gehalten werden.

Im Bereich Verkehrseffizienz werden genannt: "Enhanced Route Guidance and Navigation", "Green-Light Optimal Speed Advisory" und "V2V Merging Assistance".

Im Bereich Infotainment steht der Internet-Zugang im Vordergrund.

Die Auflistung zeigt, dass insbesondere im Bereich Sicherheit zeitkritische Datenübertragungen stattfinden. Daher ist die Verlässlichkeit der Fahrzeug-zu-FahrzeugKommunikation von entscheidender Bedeutung.

Im Mobilfunk bedeutet Verlässlichkeit der Datenübertragung Vollständigkeit (alle gesendeten Nutzdaten kommen beim Empfänger an) und Korrektheit (die gesendeten Nutzdaten und die aus den empfangenen Daten zurückgewonnenen Nutzdaten stimmen überein). Dazu werden in den Mobilfunktechnologien verschiedene Methoden eingesetzt, z.B. Frequenzdiversität, räumliche Diversität, sinnvolle Wahl der Modulationsart und der Modulationsparameter und des zu verwendenden Kanalcodes wie auch der Coderate, etc.

Derzeit sind folgende Mobilfunktechnologien für die Fahrzeug zu Fahrzeugkommunikation anwendbar: 3GPP-basiertes UMTS, HSPA, LTE, und die kommenden 5G Standards. Für die Fahrzeugdirektkommunikation werden erwähnt LTE-V und 5G D2D.

Sobald Daten periodisch wiederkehrend übertragen werden müssen, ist es effizienter, Übertragungsressourcen für die Übertragung dieser Daten zu reservieren und diese Übertragungsressourcen der Sendestation zuzuweisen. Diese Aufgabe übernimmt in den heutigen Mobilfunkstandards eine Verwaltungseinheit, die auch unter dem Begriff Scheduler bekannt ist. Diese Verwaltungseinheit ist heute typischerweise in der Mobilfunk-Basisstation angeordnet. Bei dem LTE Mobilkommunikationssystem wird die Basisstation kurz als eNodeB bezeichnet, entsprechend "Evolved Node Basis".

Es besteht also die Situation, dass bei der Direktkommunikation zwischen Fahrzeugen auf Mobilfunkbasis (LTE-V, 5G) die Übertragung von Fahrzeug zu Fahrzeug stattfindet, aber der Netzanbieter über die Basisstation eNodeB die Ressourcen kontrolliert. Mit diesem sogenannten Scheduling legt der Mobilfunkanbieter fest, welche Frequenzressource zu welchem Zeitpunkt für die Direktkommunikation verwendet werden darf.

Insbesondere werden - im Mobilfunk - alle Aktivitäten der Nutzer innerhalb einer Zelle von der Basisstation orchestriert. Der Scheduler, es handelt sich in der Regel um eine Software-Komponente in der Basisstation, teilt jedem Teilnehmer mit, zu welchem Zeitpunkt und auf welchen Frequenzen des Übertragungsrahmens er bestimmte Daten senden darf. Seine Hauptaufgabe besteht also in der gerechten Zuordnung der Übertragungsressourcen zu den verschiedenen Teilnehmern. Dadurch werden Kollisionen vermieden, in beiden Übertragungsrichtungen von einem Teilnehmer (Uplink) und zu einem Teilnehmer (Downlink) der Datenverkehr geregelt und ein effizienter Zugriff für eine Vielzahl von Nutzern ermöglicht.

Immer mehr Anwendungen im Fahrzeug benötigen eine Datenverbindung. In den letzten Jahren sind viele Anwendungen hinzugekommen, die eine Verbindung zu einem Server benötigen, wie z.B. Google Maps Navigation und Telefonie sowie Anwendungen aus dem Infotainment-Bereich wie Internetradio, Video-Streaming-Dienste und Wetterdienste.

Zum Teil stellen solche Dienste keine besonders hohen Anforderungen an die Datenverbindung. Andere Dienste wie Audio- und Video-Streaming-Dienste stellen zwar erhöhte Anforderungen, sind aber nicht sicherheitsrelevant und die Variationen in Datenrate und Latenz können durch Pufferungsmaßnahmen auf Applikationsebene abgefangen werden (z.B. Streaming Buffer). Einige Anwendungen benötigen sogar nur eine sporadische Datenverbindung, um aktuelle Informationen von einem Server zu beziehen und dem Nutzer anzuzeigen.

Neuere Applikationen stellen deutlich höhere Anforderungen an die Kommunikation. Insbesondere im Bereich der sicherheitsrelevanten Applikationen spielen die Latenz der Datenübertragung und die Verlässlichkeit der Datenübertragung eine wichtige Rolle. Manche Applikationsbereiche, wie z.B. der Austausch von Kfz-Sensorrohdaten, basierend auf denen z.B. eine koordinierte Steuerung von Verkehrsteilnehmern geschieht, benötigen eine bestimmte Datenrate und Latenz, um ordnungsgemäß zu funktionieren. Anforderungen dieser Art werden im Allgemeinen als Quality-of-Service-Anforderungen bezeichnet, kurz QoS. Bei dem Mobilkommunikationssystem LTE (Long Term Evolution) wurde mit dem Radio Bearer Konzept eine Lösung spezifiziert, die QoS im Mobilfunkbereich implementieren soll. Es wurde von der 3GPP in der Spezifikation TS 23.401 standardisiert. Dieses Konzept wird aber in der Praxis oft nicht eingesetzt.

Im Bereich von IP-Netzen sind QoS-Lösungen standardisiert. Beispiele für die bekannten Lösungen im IP-Netz-Bereich sind die Protokolle Integrated Services IntServ, Resource Reservation Protocol RSVP, Differentiated Services DiffServ und Multiprotocol Label Switching MPLS. Diese Lösungen sind aber nicht für den Bereich von Mobilfunknetzen konzipiert.

Aktuelle Mobilfunkmodems bieten dem Nutzer nur eingeschränkten Zugriff auf Daten aus den unteren Schichten. Stattdessen kapseln sie, gemäß des klassischen ISO/OSI-Schichtenmodells der Kommunikation, die unteren Schichten von der Applikationsschicht ab. Dies ist für herkömmliche Anwendungen im Mobilfunk auch sinnvoll. Jede Schicht i bietet der darüber liegenden Schicht i+1 einen möglichst guten Service ("best effort"). Die Unabhängigkeit der Schichten hat den Sinn, dass jede Schicht einzeln entwickelt, optimiert, und auch gegen eine andere Implementierung (z.B. eines anderen Herstellers) ausgetaucht werden kann.

Aus der WO 98/45994 A2 ist es bekannt, bei einem Open System Interconnection System OSI einen sogenannten "Upward Service Access Point" pro Schicht des ISO/OSI-Schichtenmodells der Datenkommunikation einzufügen, um Quality-of-Service Parameter an die jeweils nächst höhere Schicht weiterzuleiten.

Zugleich bieten aktuelle technische Realisierungen eine Möglichkeit für eine Applikation, die aktuelle Situation auf der unteren Schicht zu beobachten. Dies ist jedoch eine stark vereinfachte und verzögerte Information, um z.B. die Balkenanzeige bei Mobiltelefonen zu ermöglichen. Solche Realisierungen basieren auf der Anwendung des AT-Befehlssatzes, der zum Konfigurieren und Parametrieren von Modems verwendet wird und auch unter dem Begriff Hayes-kompatibler Befehlssatz bekannt ist. Von der ITU-T wurde dieser Befehlssatz in der Empfehlung V.250 umgesetzt.

Aus der US 2009/0147684 A1 ist eine dynamische, integrierte "Multi-Service Cross Layer"-Optimierung bekannt. Darin sind verschiedene Cross Layer Interaktionen zwischen den 7 Schichten des ISO/OSI-Schichtenmodells der Datenkommunikation gezeigt.

Eine Anwendung mit einem Modul für die Anpassung der Quality of Service Einstellungen ist aus US 2002/0054578 A1 bekannt.

Aus der US 2012/0069748 A1 ist ein Verfahren zum Bestimmen einer Dienstqualität einer mobilen Anwendung bekannt, die auf einem mit einem Netzwerk gekoppelten mobilen Gerät ausgeführt wird. Das Verfahren kann durch eine mobile Überwachungsanwendung (Mobile Monitoring Application, MMA) implementiert werden. Dabei umfasst das Verfahren das Sammeln von Netzwerknutzungsmessungen, die mehreren Netzwerkkommunikationssitzungen zugeordnet sind. Das Verfahren kann auch das Auswerten der gesammelten Netzwerknutzungsmessungen umfassen, um anwendungsspezifische Nutzungsdaten zu bestimmen, die der mobilen Anwendung zugeordnet sind. Weiterhin umfasst das Verfahren das Bestimmen der Dienstqualität der mobilen Anwendung basierend auf den anwendungsspezifischen Nutzungsdaten.

Aus der US 2015/0063152 A1 ist ein System zum Erzeugen einer Nutzungsmetrik unter Verwendung einer Vielzahl von Client-Geräten, die mit einem Netzwerkserver verbunden sind, bekannt. Das System umfasst einen Kanalzustandsmonitor und einen Prüfpaketkoordinator, die sich auf jedem Client-Gerät befinden. Der Kanalzustandsmonitor ist zum Sammeln von Kanalinformationen konfiguriert und der Prüfpaketkoordinator zum Formatieren eines Paketstroms, der die Kanalinformationen enthält. Der Prüfpaketkoordinator ist dafür vorgesehen, den Übertragungszeitpunkt des Paketstroms zu planen oder zu steuern. Das System umfasst zudem einen Netzwerküberlastungsrechner, der sich auf dem Netzwerkserver befindet, wobei der Netzwerküberlastungsrechner so konfiguriert ist, dass er den Paketstrom von jedem Clientgerät empfängt und eine Nutzungsmetrik basierend auf dem von jedem Client-Gerät empfangenen Paketstrom generiert.

Aus Sicht eines Anwendungsentwicklers aus dem automotiven Umfeld ist dieser Zustand unzureichend. Eine Fahrzeugfunktion soll nur kontrollierte Ausfälle haben, so dass dem Kunden oder, in Zukunft, den Fahrerassistenzsystemen ADAS (Advanced Driver Assistance Systems), bereits vor dem Benutzen der Funktion mitgeteilt werden kann, dass diese beeinträchtigt oder gar nicht verfügbar ist. Das aktuelle Schema basierend auf dem AT-Befehlssatz und die Beobachtbarkeit im Mobilfunkbereich sind nicht ausreichend und verhindern ein Vorgehen dieser Art. Aus Sicht des Anwendungsentwicklers wirkt die Veränderung der Verbindungsqualität wie ein zufälliger Prozess und geschieht unvorhersehbar schnell.

Es besteht also der Bedarf für ein verbessertes Quality-of-Service Überwachungssystem, welches insbesondere für fahrzeugrelevante Applikationen zum Einsatz kommen soll.

Diese Aufgabe wird durch ein Verfahren zur Überwachung der Qualität einer Datenverbindung gemäß Anspruch 1 und eine Teilnehmerstation gemäß Anspruch 7 gelöst.

Die abhängigen Ansprüche beinhalten vorteilhafte Weiterbildungen und Verbesserungen der Erfindung entsprechend der nachfolgenden Beschreibung dieser Maßnahmen.

Die Lösung besteht in einer Form des Quality-of-Service Monitoring, die Quality-of-Service für fahrzeugrelevante Applikationen deutlich attraktiver macht. Dies gilt sowohl für Fahrzeughersteller wie auch Netzbetreiber und im allgemeineren Sinne für alle Anbieter von Applikationen, die eine hohe Verfügbarkeit und geringe Latenz erfordern ("mission-critical applications").

Das vorgestellte Konzept ändert dies signifikant und eröffnet damit viele neue Möglichkeiten für Anwendungen im Zusammenhang mit Kraftfahrzeugen, die eine Funkanbindung benötigen.

Vorzugsweise kann das Konzept zweistufig realisiert werden. In einem ersten Schritt wird die im Funkmodem gesehene Qualität in dem sicherheitskritischen Anwendungsprogramm selbst beobachtet.

### - Stufe 1: Monitoring der am Funkmodem gemessenen Qualität

In dieser Stufe reicht das Mobilfunkmodem aktuelle Quality-of-Service Angaben für den jetzigen Zeitpunkt an die Applikationsschicht hoch. Im Gegensatz zu der bisherigen Lösung, wo Parameter aus der Kanalschätzung weitergegeben werden, geht dieses Konzept noch deutlich darüber hinaus. Aufgrund von Messungen in der Bitübertragungsschicht werden auch die Paketzustellrate, die geschätzte Latenz der Datenübertragung und die ermittelte Datenrate an die Applikationsschicht hochgereicht. Darüber hinaus können aber auch Einstellungsparameter wie die zugewiesene Bandbreite, die Modulationsart und Modulationsparameter, z.B. welcher QAM-Mode benutzt wird, weitergeleitet werden.

Durch diese Information bekommt die Applikation direkt mit, wenn das Modem auf Kanalveränderungen nicht reagieren kann (z.B. wegen der Verringerung der Paketzustellungsrate), und auch wie das Netz reagiert, z.B. durch Änderung der Modulationsart oder des Codierungs-Schemas und/oder der Bandbreite.

### - Stufe 2: Monitoring des Netzzustands

In der zweiten Stufe wird das Konzept noch einmal deutlich erweitert. Neben Messungen vom Funkmodem sollen in dieser Ausbaustufe auch Informationen vom Netz an die Applikationsschicht weitergegeben werden. Diese erweitern das Wissen über die Service-Qualität in der Fahrzeugapplikation in zwei Dimensionen:
1. Das Netz kann der Applikation Informationen über seinen eigenen Zustand (Netzlast, etc.) sowie über den Zustand des Modems im Netz (z.B. ob es nah an einem Handover Punkt angekommen ist, etc.) mitteilen. Die Information ob das Modem an einem Handover Punkt angekommen ist, entspricht dabei der Information ob die Teilnehmerstation nah an der Zellgrenze angekommen ist.
2. Das Netz kann diese Parameter auch in einem gewissen Maße in die Zukunft prädizieren. Die Basisstation einer Zelle kann beispielsweise abschätzen, wie viele Nutzer sich in naher Zukunft in der Zelle befinden werden. Basierend darauf und auf den aktuellen Kanalkonditionen kann die Zelle abschätzen, welchen Quality-of-Service die Zelle dem gegebenen Nutzer in naher Zukunft bieten kann. Dies kann von Fahrzeugseite unterstützt werden, indem die aktuelle Position und die geplante Route an das Netz übertragen werden.
3. Im Bereich der Device-to-Device Kommunikation, die im Out-of-Coverage Mode und damit ohne zentrale Basisstation betrieben werden kann, ist es denkbar, dass die in Stufe 1 beschriebene Funktionalität im Mobilfunkmodem um eine prädiktive Komponente erweitert werden kann.

Dabei sind Vorhersagen im Bereich von mehreren Sekunden möglich. Dies gibt einer Applikation Zeit, um auf Veränderungen zu reagieren.

Als Beispiel für eine Reaktion auf Applikationsschicht wird die sicherheitsrelevante Applikation "Platooning" genannt. Bei dieser Anwendung im Fahrzeug wird eine FahrzeugKolonne koordiniert gesteuert. Hier ist es von Interesse, möglichst geringe Abstände zwischen Fahrzeugen, z.B. Lastkraftwagen, zu realisieren. Wird die Applikation über eine höhere Latenz der Kommunikation im Funknetz informiert (z.B. weil die Netzlast gerade wächst), kann der Abstand zwischen den Platoonteilnehmern erhöht werden.

Ein Ausführungsbeispiel der Erfindung ist in den Zeichnungen dargestellt und wird nachfolgend anhand der Figuren näher erläutert.

Es zeigen:
- Fig. 1: das Prinzip der Fahrzeugkommunikation über Mobilfunk;
- Fig. 2: einen typischen Protokollstapel einer LTE-Basisstation eNodeB;
- Fig. 3: ein Blockdiagramm für die Fahrzeugelektronik eines Kraftfahrzeuges;
- Fig. 4: einen Protokollstapel einer LTE Teilnehmerstation; und
- Fig. 5: den Nachrichtenaustausch zwischen Teilnehmerstation und Netzverwaltungseinheit für den "Platooning"-Anwendungsfall.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

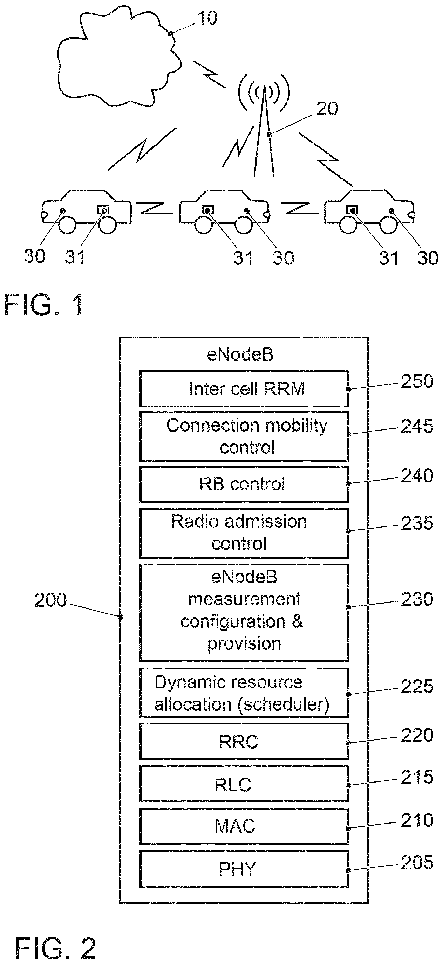

Fig. 1 zeigt das Prinzip der Fahrzeugkommunikation mittels Mobilfunk. Die Fahrzeuge sind mit Bezugszahl 30 versehen. Sie sind jeweils mit einem Kommunikationsmodul 31 ausgestattet, das als Sende- und Empfangseinheit für die Mobilkommunikation dient. Alle Nachrichten von den Fahrzeugen (Uplink) und zu den Fahrzeugen (Downlink) werden entweder über eine Basisstation geleitet, die eine Mobilfunkzelle bedient, oder im Fall von Fahrzeugdirektkommunikation (Sidelink) unmittelbar zwischen den Fahrzeugen ausgetauscht. Befinden sich die Fahrzeuge innerhalb dieser Mobilfunkzelle, sind sie bei der Basisstation angemeldet bzw. eingebucht. Im Folgenden wird die Basisstation als Netzwerkverwaltungseinheit 20 bezeichnet. Verlassen sie die Mobilfunkzelle, werden sie an die benachbarte Zelle übergeben (Hand Over) und dementsprechend an der Netzwerkverwaltungseinheit 20 abgemeldet bzw. ausgebucht. Die Netzwerkverwaltungseinheit 20 stellt auch einen Zugang zum Internet 10 zur Verfügung, so dass die Fahrzeuge 30 bzw. alle anderen Mobilfunk-Teilnehmer in der Mobilfunkzelle mit Internetdaten versorgt sind.

Diese Techniken sind standardisiert und es wird diesbezüglich auf die entsprechenden Spezifikationen von Mobilfunkstandards hingewiesen. Als ein modernes Beispiel eines Mobilfunkstandards wird auf die 3GPP Initiative und den LTE-Standard (Long Term Evolution) Bezug genommen. Viele der zugehörigen ETSI Spezifikationen liegen z.Z. in der Version 13 vor. Als Beispiel werden genannt: ETSI TS 136 213 V13.0.0 (2016-05); Evolved Universal Terrestrial Radio Access (E-UTRA); Physical layer procedures(3GPP TS 36.213 version 13.0.0 Release 13).

Die Belegung der Übertragungsressourcen geschieht nach LTE-Standard mithilfe eines sogenannten "Schedulers", der einer Verwaltungseinheit entspricht, die die Übertragungsressourcen verwaltet. Der Scheduler ist gemäß LTE-Standard in der Basisstation angeordnet. Diese Basisstation wird im LTE-Standard als eNodeB bezeichnet und ist dementsprechend spezifiziert. Der Protokollstapel einer solchen Basisstation eNodeB ist in der Fig. 2 gezeigt. Die Bezugszahl 200 bezeichnet die Gesamtheit der verschiedenen implementierten Protokolle. Mit der Bezugszahl 205 ist die Bitübertragungsschicht bezeichnet, also Schicht 1 (Physical Layer) des ISO/OSI Schichtenmodells der Datenkommunikation. Die Vermittlungsschicht, Schicht 2 (Data Link Layer) ist bei LTE durch die Schichten 210 Medium Access Control Layer, 215 Radio Link Control Layer und 220 Radio Resource Control Layer realisiert. Darüber ist die schon erwähnte Funktionalität des Schedulers, also der Verwaltungseinheit die die Ressourcenbelegung vornimmt, angesiedelt. Diese Einheit ist mit der Bezugszahl 225 bezeichnet. Darüber befindlich ist eine Schicht 230 angesiedelt, die die Auswertung von Messungen und die Vornahme von Konfigurationen für die Basisstation eNodeB vornimmt. Mit der Bezugszahl 235 ist die Radio Admission Control Schicht RAC bezeichnet. Die Schicht RBC entsprechend Radio Bearer Control hat die Bezugszahl 240. Darüber sind noch die Schichten Connection Mobility Control CMC 245 und Inter Cell Radio Ressource Mangagement RRM 250 angeordnet. Die einzelnen Schichten der Netzwerkverwaltungseinheit 20 sind im Standard näher erläutert. Von Interesse für die vorliegende Erfindung ist die Schicht 230, die die Auswertung von Messungen und die Vornahme von Konfigurationen durchführt. Aus diesem Grund werden im Folgenden nähere Erklärungen hauptsächlich zu dieser Schicht 230 gegeben. Bezüglich der anderen aufgelisteten Schichten, wird ausdrücklich auf den LTE-Standard Bezug genommen im Hinblick auf die Offenbarung dieser Schichten.

Zu diesem Zweck wird darauf hingewiesen, dass die Fig. 2 in dieser Form dem LTE-Standard entnommen wurde. Es handelt sich um die Spezifikation ETSI TS 136 211 V13.1.0. Der Titel dieser Spezifikation lautet: LTE; Evolved Universal Terrestrial Radio Access (E-UTRA); Physical Channels and Modulation (3 GPP TS 36.211 Virgin 13.1.0 Release 13).

Die Schicht 230 wird die für die Erfindung vorgesehene 2. Stufe des QoS Monitoring durchführen. Also die Zurverfügungstellung von Informationen über den Zustand des Netzes. Diese Informationen werden an die Mobilfunkteilnehmer, übertragen. Dabei kann es vorgesehen sein, das die Informationen nur an diejenigen Teilnehmer übertragen werden, die sich für diesen besonderen QoS-Monitoring-Service angemeldet haben.

In einer weiteren Ausführungsform wird auch die Information über den Zustand des Modems im Netz weitergereicht. Die Fahrzeuge bewegen sich ja in einer Mobilfunkzelle. Wenn die Position bekannt ist, kann die Schicht 230 z.B. die Information weiterleiten, dass das Modem jetzt die Zellgrenze erreicht hat und somit an einen Handover-Punkt angekommen ist.

In einer erweiterten Ausführungsform wird auf Schicht 230 ein Algorithmus implementiert, der eine Prädiktion der Informationen zum Netzzustand und/oder zum Zustand des Modems im Netz durchführt. Eine Basisstation einer Zelle kann beispielsweise abschätzen, wie viele Nutzer sich in naher Zukunft in der Zelle befinden. Basierend darauf und auf der aktuellen Kanalkondition kann die Basisstation abschätzen, welchen Quality-of-Service die Zelle dem jeweiligen Nutzer in naher Zukunft bieten kann. Um die Genauigkeit der Vorhersage zu erhöhen, ist es vorgesehen, dass der Teilnehmer, der sich für diese Form des QoS-Monitoring angemeldet hat, seine geplante Route und die derzeitige Position an die Netzwerkverwaltungseinheit 20 übermittelt. Die in der Basisstation angesiedelte Netzverwaltungseinheit 20 kann daraus besser abschätzen, welche nachfolgende Zelle der Teilnehmer in naher Zukunft erreicht. Da die Basisstationen der verschiedenen Zellen auch untereinander Informationen hinsichtlich des Zustandes des Netzes wie Netzauslastung in der Zelle austauschen, kann die Netzverwaltungseinheit 20 den Teilnehmer frühzeitig informieren, wenn der gelieferte QoS sich entlang der geplanten Route verändern sollte.

Vorhersagen im Bereich von mehreren Sekunden sind mit dieser Lösung möglich. Eine weitergehende Vorhersage wie auch die Vorhersagegenauigkeit kann dadurch erreicht werden, dass mehr Teilnehmer sich für den QoS-Monitoring Service anmelden und ihre genaue Routeninformation mitteilen.

Als Beispiel einer fahrzeugrelevanten Anwendung, für die das erweiterte QoS-Monitoring von Vorteil ist, wird das sogenannte "Platooning" genannt. Dabei werden mehrere oder sogar viele Fahrzeuge mit Hilfe eines technischen Steuerungssystems koordiniert gesteuert, so dass sie in sehr geringem Abstand hintereinander fahren können, ohne dass die Verkehrssicherheit beeinträchtigt wird. Dies führt, insbesondere bei Lastkraftwagen, zu einer beträchtlichen Verringerung des Kraftstoffverbrauchs und zu einer beträchtlichen Verringerung von Treibhausgasen. Diese Anwendung ist aber besonders sicherheitskritisch. Es muss jederzeit gewährleistet sein, dass die Fahrzeuge der Kolonne anhalten können, auch dann, wenn der QoS des Kommunikationsdienstes, der für die koordinierte Steuerung benutzt wird, sich verschlechtert. Die Lösung besteht darin, dass der Abstand zwischen den Fahrzeugen vergrößert wird, wenn eine Verschlechterung im QoS des Kommunikationsdienstes eintritt. Umgekehrt kann der Abstand wieder verringert werden, wenn eine Verbesserung im QoS des Kommunikationsdienstes eintritt.

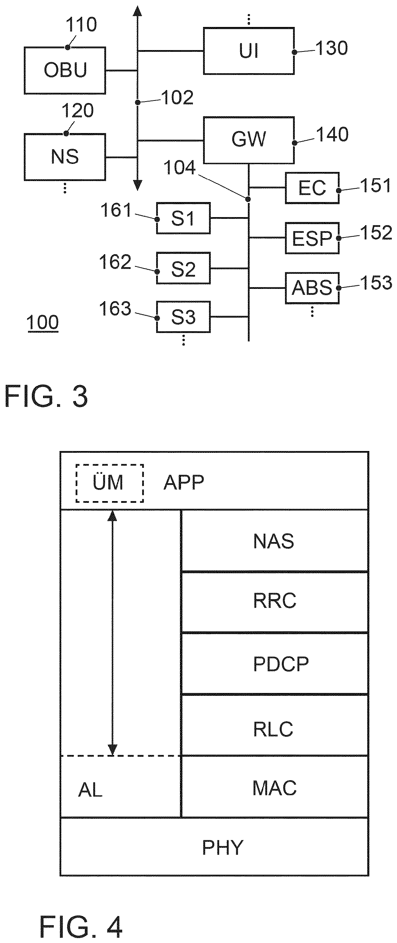

Fig. 3 zeigt den typischen Aufbau einer Kfz-Elektronik eines modernen Kraftfahrzeuges. Mit der Bezugszahl 151 ist ein Motorsteuergerät bezeichnet. Die Bezugszahl 152 entspricht einem ESP-Steuergerät und die Bezugszahl 153 bezeichnet ein ABS-Steuergerät. Weitere Steuergeräte wie Getriebesteuergerät, Airbagsteuergerät usw. können im Kraftfahrzeug vorhanden sein. Die Vernetzung solcher Steuergeräte geschieht typischerweise mit dem CAN-Bussystem (Controller Area Network) 104 welches als ISO Norm standardisiert ist, ISO 11898. Da die verschiedensten Sensoren im Kraftfahrzeug installiert werden und diese nicht mehr nur an einzelne Steuergeräte angeschlossen werden, werden solche Sensordaten ebenfalls über das Bussystem 104 zu den einzelnen Steuergeräten übertragen. Beispiele von Sensoren im Kraftfahrzeug sind Raddrehzahlsensoren, Lenkwinkelsensoren, Beschleunigungssensoren, Drehratensensoren, Reifendrucksensoren, Abstandssensoren usw. Die verschiedenen Sensoren mit dem das Fahrzeug ausgestattet ist, sind in der Fig. 3 mit der Bezugszahl 161, 162, 163 bezeichnet.

Das moderne Kraftfahrzeug kann aber noch weitere Komponenten aufweisen, wie Videokameras, z.B. als Rückfahrkamera oder als Fahrerüberwachungskamera, oder auch ein Radargerät für die Realisierung eines Radartempomaten oder zur Realisierung eines Abstandswarnungs- oder Kollisionswarnungsgerätes.

Im Kraftfahrzeug befinden sich dann auch noch weitere elektronische Vorrichtungen. Diese sind mehr im Bereich der Fahrgastzelle angeordnet und werden z.T. auch von dem Fahrer bedient. Beispiele sind eine Benutzerschnittstellenvorrichtung, mit der der Fahrer Fahrmodi anwählen kann, aber auch klassische Komponenten bedienen kann. Darunter fallen Gangwahl sowie auch Blinkersteuerung, Scheibenwischersteuerung, Lichtsteuerung, usw. Diese Benutzerschnittstellenanordnung ist mit der Bezugszahl 130 versehen. Die Benutzerschnittstellenanordnung 130 ist oft auch mit einem Dreh/Druckschalter ausgestattet, über den der Fahrer die verschiedenen Menüs anwählen kann, die auf einem Display im Cockpit angezeigt werden. Andererseits fällt auch ein berührungsempfindliches Display in diese Kategorie. Selbst die Spracheingabe für die Bedienungsunterstützung fällt in diesen Bereich.

Davon unterschieden wird hier ein Navigationssystem 120, welches ebenfalls im Bereich des Cockpits verbaut wird. Die Route, welche auf einer Karte angezeigt wird, kann natürlich ebenfalls auf dem Display im Cockpit dargestellt werden. Weitere Komponenten, wie eine Freisprecheinrichtung, können vorhanden sein, sind aber nicht näher dargestellt. Die Bezugszahl 110 bezeichnet eine On-Board Unit. Diese On-Bord Unit 110 entspricht einem Kommunikationsmodul über das das Fahrzeug mobile Daten empfangen und senden kann. Typischerweise handelt es sich hier um ein Mobilfunk-Kommunikationsmodul, z. B. nach dem LTE-Standard.

Die Geräte des Fahrgastraumes sind ebenfalls untereinander vernetzt über ein Bussystem, das mit der Bezugszahl 102 bezeichnet wird. Es kann sich ebenfalls um das CAN-Bussystem nach ISO 11898-2 Standard handeln, ggfs. hier in einer Variante für Datenübertragung mit höherer Datenrate zwischen Infotainment-Geräten. Zu dem Zweck, das fahrzeugrelevante Sensordaten über die Kommunikationsschnittstelle 110 zu einem anderen Fahrzeug oder zu einem Zentralrechner übertragen werden sollen, ist ein Gateway 140 vorgesehen. Dieses ist mit beiden verschiedenen Bussystemen 102 und 104 verbunden. Das Gateway ist dazu ausgelegt die Daten, die es über den CAN-Bus 104 empfängt so umzusetzen, dass sie in das Übertragungsformat des Highspeed-CAN-Busses 102 umgesetzt werden, so dass sie in den dort spezifizierten Paketen verteilt werden können. Für die Weiterleitung dieser Daten nach extern, also zu einem anderen Kraftfahrzeug oder zu einem Zentralrechner, ist die On-Board-Unit mit der Kommunikationsschnittstelle 110 dazu ausgerüstet, diese Datenpakete zu empfangen und wiederum in das Übertragungsformat des entsprechend eingesetzten Mobilfunkstandards umzusetzen.

Fig. 4 zeigt einen Protokollstapel einer LTE-Teilnehmerstation, in LTE Terminologie typischerweise als User Equipment (UE) bezeichnet. Die unterste Schicht betrifft die Bitübertragungsschicht (Physical Layer) PHY. Die darüber befindlichen Schichten sind Medium Access Layer MAC, Radio Link Control Layer RLC, Packet Data Convergence Layer PDCP, Radio Resource Control Layer RRC und Network Access Stratum NAS. Darüber befindlich ist die Anwendungsschicht APP. Auf dieser Schicht laufen die fahrzeugrelevanten Anwendungen, also z.B. die zuvor erwähnte Anwendung des Platooning. Da die einzelnen Schichten in Fig. 4 aufeinander aufbauen und über definierte Schnittstellen miteinander kommunizieren, ist ein Zugriff von der Anwendungsschicht auf die Bitübertragungsschicht nicht einfach möglich. Dieser schichtenübergreifende Zugriff wird für das hier vorgeschlagene QoS-Monitoring benötigt. Um dies Hardware-unabhängig zu erreichen, wird die Implementierung einer Abstraction Layer AL in dem in Fig. 4 gezeigten Protokollstapel vorgesehen. Im Beispiel von Fig. 4 ist der schichtenübergreifende Zugriff durch den Pfeil zwischen Bitübertragungsschicht PHY und der Abstraction Layer Schicht AL angedeutet. Die Informationen über den Zustand des Netzes kommen im Protokollstapel ebenfalls über die Bitübertragungsschicht PHY in der Teilnehmerstation an. Sie können ebenfalls über die Abstraction Layer Schicht AL abgeholt werden. Solche Abstraction Layer sind von der 3GPP schon spezifiziert worden, z.B. für den Austausch von Informationen zwischen Basisstation eNodeB und Teilnehmerstation UE im Rahmen des Hybrid Automatic Repeat Request (HARQ)-Prozesses.

Das Verbindungsqualitätsüberwachungsmodul ÜM ist vorzugsweise als Programm-Modul des Anwendungsprogramms in der Anwendungsschicht APP realisiert. Dieses Modul holt in einem Ausführungsbeispiel die nötigen Informationen von der Bitübertragungsschicht PHY und der Schicht, die die Netzzustandsinformationen bereitstellt, ab. Alternativ könnte das Modul als eigenständiges Anwendungsprogramm realisiert werden. Dann müsste es über eine definierte Schnittstelle verfügen über die es mit anderen Anwendungsprogrammen Daten austauschen kann.

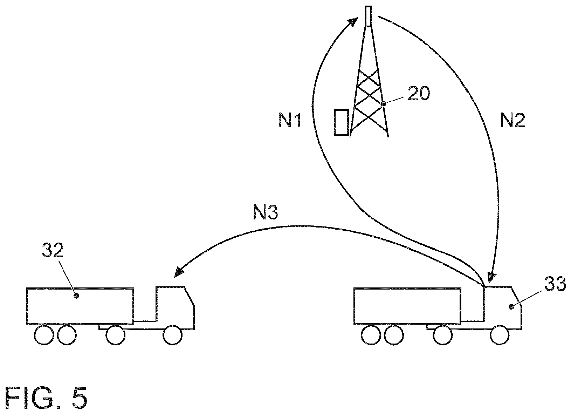

Fig. 5 zeigt noch den Ablauf der Kommunikation für den Anwendungsfall des schon erwähnten "Platoonings".

Im Bild dargestellt sind nur zwei Lastkraftwagen 32, 33 einer Fahrzeugkolonne. Das vorausfahrende Fahrzeug 33 ist das sogenannte Platoon-Führungsfahrzeug. Es koordiniert die zu dem Platoon gehörenden Kolonnenfahrzeuge 32. Im Bild ist nur ein weiteres Kolonnenfahrzeug 32 dargestellt. Es können aber weitere Fahrzeuge zu der Kolonne gehören. Das Platoon-Führungsfahrzeug 33 kommuniziert mit der Basisstation 20 und benachrichtigt die Netzverwaltungseinheit über die aktuelle Position und die geplante Route der Kolonne mit einer ersten Nachricht N1. Die Netzverwaltungseinheit teilt dem Platoon-Führungsfahrzeug 33 die Informationen über den Netzzustand in einer Nachricht N2 mit, darunter die Netzlast und/oder eine Information über den Zustand der Teilnehmerstation im Netz. Als Information über den Zustand der Teilnehmerstation wird insbesondere die Information mitgeteilt, dass sich das Fahrzeug 33 der Zellgrenze der von der Basisstation 20 verwalteten Mobilfunkzelle nähert.

Das Platoon-Führungsfahrzeug 33 bewertet die Informationen und gibt die Informationen an die Applikationsschicht APP weiter. In dem betrachteten Fall, bei dem die Applikation den "Platooning"-Fall betrifft, wird die Applikation entsprechend reagieren, d.h., dass sie z.B. bei schlechter werdender Verbindungsqualität den Kolonnenfahrzeugen 32 mitteilt, dass sie den Abstand zum vorausfahrenden Fahrzeug vergrößern sollen. Diese Information wird, wie in Fig. 5 dargestellt, in der Nachricht N3 übertragen.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein, oder ein Teil der über das Betriebssystem ausgeführt wird.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

Das vorgestellte Konzept ist nicht nur im Bereich Mobilfunkkommunikation einsetzbar. Auch im Bereich von WLAN IEEE 802.11x, insbesondere IEEE 802.11p Kommunikation gibt es Kommunikation in Zellen und Handover, und die vorgestellten Lösungen sind dort einsetzbar.

### Bezugszeichenliste

- 10: Internet
- 20: Basisstation
- 30: mobile Teilnehmerstation
- 31: Kommunikationsmodul
- 32: mobile Teilnehmerstation
- 33: mobile Teilnehmerstation
- 100: Blockdiagramm Fahrzeug-Elektronik
- 102: Highspeed CAN-Bus
- 104: CAN-Bus
- 110: On-Board Unit
- 120: Navigationssystem
- 130: Benutzerschnittstellen-anordnung
- 140: Gateway
- 151: Motor-Steuergerät
- 152: ESP-Steuergerät
- 153: ABS-Steuergerät
- 161: Sensor 1
- 162: Sensor 2
- 163: Sensor 3
- 200: Protokollstapel
- 205: PHY Schicht
- 210: MAC Schicht
- 215: RLC Schicht
- 220: RRC Schicht
- 225: Scheduler
- 230: Messungs-, Konfigurations- & Verwaltungsschicht
- 235: RAC Schicht
- 240: RBC Schicht
- 245: CMC Schicht
- 250: RRM Schicht
- APP: Anwendungsschicht
- ÜM: Überwachungsmodul
- NAS: NAS Schicht
- RRC: RRC Schicht
- PDCP: PDCP Schicht
- RLC: RLC Schicht
- MAC: Mediumzugriffsschicht
- AL: Adaptionsschicht
- PHY: Bitübertragungsschicht
- N1: 1. Nachricht
- N2: 2. Nachricht
- N3: 3. Nachricht

## Patentansprüche

1. Verfahren einer mobilen Teilnehmerstation (30, 32, 33) zur Überwachung der Qualität einer Datenverbindung, wobei die Daten über einen gestörten Funkkanal in einer Zelle eines Übertragungsnetzes zu mindestens einer mobilen Teilnehmerstation (30, 32, 33) übertragen werden, wobei in der mobilen Teilnehmerstation (33) ein Zustand der Datenverbindung in einem Überwachungsmodul (ÜM) als Teil eines Anwendungsprogramms in einer Applikationsschicht (APP) wenigstens basierend auf Messungen in einer Bitübertragungsschicht (PHY) überwacht wird, und wobei die Messungen in der Bitübertragungsschicht (PHY) ohne Durchlaufen von einer oder mehreren Zwischenschichten direkt an die Applikationsschicht (APP) weitergegeben werden oder durch die Applikationsschicht (APP) von der die Messungen bereitstellenden Schicht abgeholt werden, **dadurch gekennzeichnet, dass** zusätzlich oder alternativ zu der Zustandseinschätzung der Datenverbindung basierend auf wenigstens den Messungen in der Bitübertragungsschicht (PHY) auch Informationen über den Zustand des Übertragungsnetzes bei der Zustandseinschätzung in dem Überwachungsmodul (ÜM) berücksichtigt werden, wobei zusätzlich zu den Messungen in der Bitübertragungsschicht (PHY) auch Parameter der Datenverbindung an die Applikationsschicht (APP) weitergereicht werden, wobei die Parameter der Datenverbindung die zugewiesene Bandbreite und/oder die benutzte Modulationsart mit den eingestellten Modulationsparametern umfassen.

2. Verfahren nach Anspruch 1, wobei als Information über den Zustand des Übertragungsnetzes eine Information über eine Netzlast und/oder eine Information über einen Zustand der Teilnehmerstation (33) im Netz an das Überwachungsmodul (ÜM) weitergegeben wird.

3. Verfahren nach Anspruch 2, wobei die Information über den Zustand der mobilen Teilnehmerstation (33) im Netz angibt, ob die mobile Teilnehmerstation (33) nahe an einer Zellgrenze angekommen ist.

4. Verfahren nach Anspruch 3, wobei die mobile Teilnehmerstation (33) eine Information über eine aktuelle Position der mobilen Teilnehmerstation (33) und eine geplante Route an eine Netzverwaltungseinheit (20) übermittelt.

5. Verfahren nach einem der Ansprüche 1 bis 4, wobei die Informationen über den Zustand des Übertragungsnetzes von einer Netzverwaltungseinheit (20) in die Zukunft prädiziert und von der Netzverwaltungseinheit (20) zu der mobilen (33) gesendet werden.

6. Verfahren nach Anspruch 5, wobei für die Prädiktion des Zustandes des Übertragungsnetzes eine Information über eine aktuelle Position der mobilen Teilnehmerstation (33) und eine geplante Route der mobilen Teilnehmerstation (33) berücksichtigt wird.

7. Mobile Teilnehmerstation (30, 32, 33) zur Verwendung bei dem Verfahren nach einem der vorhergehenden Ansprüche 1 bis 6, aufweisend ein Überwachungsmodul (ÜM), das den Zustand der Datenverbindung wenigstens basierend auf Messungen in einer Bitübertragungsschicht (PHY) überwacht, wobei das Überwachungsmodul (ÜM) Teil eines auf einer Applikationsschicht (APP) befindlichen Anwendungsprogramms ist und so ausgelegt ist, dass es die Informationen bezüglich des aktuellen Zustands der Verbindung ohne Durchlaufen von einer oder mehreren Zwischenschichten direkt von der die Messungen bereitstellenden Schicht abholt oder die Informationen von der die Messungen bereitstellenden Schicht sammelt, **dadurch gekennzeichnet, dass** das Überwachungsmodul (ÜM) so ausgelegt ist, dass es zusätzlich oder alternativ zu den Informationen bezüglich des Zustandes der Datenverbindung Informationen bezüglich des Zustandes des Übertragungsnetzes von der die Netzzustandsinformationen bereitstellenden Schicht abholt oder diese von der die Netzzustandsinformationen liefernden Schicht sammelt und eine Zustandseinschätzung der Datenverbindung basierend auf wenigstens den Messungen in der Bitübertragungsschicht (PHY) und den Informationen über den Zustand des Übertragungsnetzes vornimmt, wobei das Überwachungsmodul (ÜM) weiterhin so ausgelegt ist, dass es zusätzlich zu den Messungen in der Bitübertragungsschicht (PHY) auch Parameter der Datenverbindung berücksichtigt, wobei die Parameter der Datenverbindung die zugewiesene Bandbreite und/oder die benutzte Modulationsart mit den eingestellten Modulationsparametern umfassen.

8. Mobile Teilnehmerstation nach Anspruch 7, wobei die mobile Teilnehmerstation (33) weiterhin so ausgelegt ist, dass sie eine Information über eine aktuelle Position der mobilen Teilnehmerstation (33) und eine geplante Route an eine Netzverwaltungseinheit (20) übermittelt und von der Netzverwaltungseinheit (20) die Informationen über den Zustand des Übertragungsnetzes empfängt.

## Claims

1. Method for monitoring the quality of a data connection of a mobile subscriber station (30, 32, 33), wherein the data are transmitted to at least one mobile subscriber station (30, 32, 33) via a faulty radio channel in a cell of a transmissions network, wherein, in the mobile subscriber station (33), a state of the data connection is monitored in a monitoring module (MM) as part of an application program in an application layer (APP) at least based upon measurements in a bit transmission layer (PHY), and wherein the measurements in the bit transmission layer (PHY) are passed on directly to the application layer (APP) without passing through one or more intermediate layers, or are retrieved by the application layer (APP) from the layer providing the measurements, **characterized in that,** in addition to or as an alternative to the state assessment of the data connection based upon at least the measurements in the bit transmission layer (PHY), information about the state of the transmissions network is also taken into account in the state assessment in the monitoring module (MM), wherein, in addition to the measurements in the bit transmission layer (PHY), parameters of the data connection are also forwarded to the application layer (APP), wherein the parameters of the data connection include the assigned bandwidth and/or the modulation type that is used, along with the set modulation parameters.

2. Method according to claim 1, wherein information about a network load and/or information about a state of the subscriber station (33) in the network is passed on to the monitoring module (MM) as information about the state of the transmissions network.

3. Method according to claim 2, wherein the information about the state of the mobile subscriber station (33) in the network indicates whether the mobile subscriber station (33) has come close to a cell boundary.

4. Method according to claim 3, wherein the mobile subscriber station (33) transmits information about a current position of the mobile subscriber station (33) and a planned route to a network management unit (20).

5. Method according to one of claims 1 through 4, wherein the information about the state of the transmissions network is predicted in the future by a network management unit (20) and sent from the network management unit (20) to the mobile (33).

6. Method according to claim 5, wherein information about a current position of the mobile subscriber station (33) and a planned route of the mobile subscriber station (33) are taken into account for the prediction of the state of the transmissions network.

7. Mobile subscriber station (30, 32, 33) for use in the method according to one of the preceding claims 1 through 6, having a monitoring module (MM) that monitors the state of the data connection at least based upon measurements in a bit transmission layer (PHY), wherein the monitoring module (MM) is part of an application program located on an application layer (APP) and is designed so that it retrieves the information regarding the current state of the connection directly from the layer providing the measurements, or collects the information from the layer providing the measurements, without passing through one or more intermediate layers, **characterized in that** the monitoring module (MM) is designed so that, in addition or as an alternative to the information regarding the state of the data connection, it retrieves information regarding the state of the transmissions network from the layer providing the network state information, or collects said information from the layer supplying the network status information, and performs a state assessment of the data connection based upon at least the measurements in the bit transmission layer (PHY) and the information about the state of the transmissions network, wherein the monitoring module (MM) is furthermore designed so that, in addition to the measurements in the bit transmission layer (PHY), it also takes into account parameters of the data connection, wherein the parameters of the data connection include the assigned bandwidth and/or the modulation type that is used, along with the set modulation parameters.

8. Mobile subscriber station according to claim 7, wherein the mobile subscriber station (33) is furthermore designed so that it transmits information about a current position of the mobile subscriber station (33) and a planned route to a network management unit (20), and receives from the network management unit (20) the information about the state of the transmissions network.

## Revendications

1. Procédé d'une station d'abonné mobile (30, 32, 33) pour la surveillance de la qualité d'une liaison de données, dans lequel les données sont transmises par le biais d'un canal radio perturbé dans une cellule d'un réseau de transmission à au moins une station d'abonné mobile (30, 32, 33), dans lequel, dans la station d'abonné mobile (33), un état de la liaison de données est surveillé dans un module de surveillance (ÜM) au moins sur la base de mesures dans une couche physique (PHY), dans le cadre d'un programme d'application dans une couche d'application (APP) et dans lequel les mesures dans la couche physique (PHY) sont transmises sans traverser une ou plusieurs couches intermédiaires directement à la couche d'application (APP) ou sont récupérées par la couche d'application (APP) depuis la couche mettant à disposition les mesures, **caractérisé en ce que** en outre ou en variante à l'évaluation de l'état de la liaison de données sur la base, au moins, des mesures dans la couche physique (PHY), des informations concernant l'état du réseau de transmission sont également prises en compte lors de l'évaluation de l'état dans le module de surveillance (ÜM), dans lequel en plus des mesures dans la couche physique (PHY), des paramètres de la liaison de données sont également transmis à la couche d'application (APP), dans lequel les paramètres de la liaison de données comprennent la bande passante attribuée et/ou le type de modulation utilisé avec les paramètres de modulation réglés.

2. Procédé selon la revendication 1, dans lequel, en guise d'informations sur l'état du réseau de transmission, une information sur la charge de réseau et/ou une information sur l'état de la station d'abonné (33) dans le réseau sont transmises au module de surveillance (ÜM).

3. Procédé selon la revendication 2, dans lequel l'information sur l'état de la station d'abonné mobile (33) dans le réseau indique si la station d'abonné mobile (33) s'est approchée d'une limite de cellule.

4. Procédé selon la revendication 3, dans lequel la station d'abonné mobile (33) transmet une information sur une position actuelle de la station d'abonné mobile (33) et un itinéraire planifié à une unité de gestion de réseau (20).

5. Procédé selon l'une quelconque des revendications 1 à 4, dans lequel les informations sur l'état du réseau de transmission sont prédites dans l'avenir par une unité de gestion de réseau (20) et sont envoyées par l'unité de gestion de réseau (20) à la mobile (33).

6. Procédé selon la revendication 5, dans lequel, pour la prédiction de l'état du réseau de transmission, une information sur une position actuelle de la station d'abonné mobile (33) et un itinéraire planifié de la station d'abonné mobile (33) sont pris en compte.

7. Station d'abonné mobile (30, 32, 33) destinée à être utilisée lors du procédé selon l'une quelconque des revendications 1 à 6, présentant un module de surveillance (ÜM), qui surveille l'état de la liaison de données au moins sur la base de mesures dans une couche physique (PHY), dans laquelle le module de surveillance (ÜM) forme une partie d'un programme d'application se trouvant sur une couche d'application (APP) et est conçu de manière à récupérer les informations concernant l'état actuel de la liaison directement depuis la couche mettant les mesures à disposition sans traverser une ou plusieurs couches intermédiaires ou à recueillir les informations depuis la couche mettant les mesures à disposition, **caractérisée en ce que** le module de surveillance (ÜM) est conçu de manière à récupérer, en supplément ou en variante des informations concernant l'état de la liaison de données, des informations concernant l'état du réseau de transmission à partir de la couche mettant les informations d'état de réseau à disposition ou les collecte depuis la couche livrant les informations d'état de réseau et effectue une évaluation d'état de la liaison de données sur la base, au moins, des mesures dans la couche physique (PHY) et des informations sur l'état du réseau de transmission, dans laquelle le module de surveillance (ÜM) est en outre conçu de manière à prendre en compte, en plus des mesures dans la couche physique (PHY), également des paramètres de la liaison de données, dans laquelle les paramètres de la liaison de données comprennent la bande passante attribuée et/ou le type de modulation utilisé avec les paramètres de modulation réglés.

8. Station d'abonné mobile selon la revendication 7, dans laquelle la station d'abonné mobile (33) est en outre conçue de manière à transmettre une information sur une position actuelle de la station d'abonné mobile (33) et un itinéraire planifié à une unité de gestion de réseau (20) et à recevoir de l'unité de gestion de réseau (20) les informations sur l'état du réseau de transmission.
